# FASCICULE DE BREVET EUROPEEN

(11) **EP 1 236 407 B1**
(45) Date de publication et mention de la délivrance du brevet: **13.10.2004**
(21) Numéro de dépôt: 01105144.8
(22) Date de dépôt: 02.03.2001
(51) Int. Cl.: A23L 1/18, A23P 1/12, A23L 1/164, B29C 47/30, D01D 4/02, A21C 11/16

(54) **Céréales et filière d'extrusion**
Getreideprodukt und Extrusionskopf
Cereal products and extrusion die

(43) Date de publication de la demande: 04.09.2002
(73) Titulaire: SOCIETE DES PRODUITS NESTLE S.A., 1800 Vevey (CH)
(72) Inventeur: Deutsch, Roman,, 1095 Lutry (CH); Heck, Ernst,, 1302 Vufflens-La-Ville (CH)
(74) Mandataire: Thomas, Alain

(56) Documents cités:
- DE-U- 8 904 604
- US-A- 1 924 827
- US-A- 3 482 992
- US-A- 3 876 743
- US-A- 5 132 133
- US-A- 5 695 805

## Description

La présente invention concerne une filière d'extrusion pour la fabrication de céréales expansées, le procédé mettant en oeuvre une telle filière d'extrusion ainsi que les céréales obtenues par le procédé.
Les céréales prêtes à l'emploi, pour petit déjeuner par exemple, existent principalement sous la forme de flocons, de grains expansés, de masse extrudée ou de grain étiré en forme de brin.
Les procédés de fabrication de céréales du type grains étirés sous forme de brins ou de fils sont longs et complexes. Il s'agit généralement de commencer par cuire en milieux aqueux les grains de céréales. Ces grains cuits sont ensuite égouttés, refroidis et laissés de côté pour permettre une répartition uniforme de l'humidité au sein de ces grains. Cette étape d'équilibrage ou de tempérage dure généralement entre 15 et 20 heures. Les grains sont ensuite préséchés puis formés sous forme de brins ou de fils. Cette étape est réalisée par passage des grains entre deux rouleaux, un lisse et l'autre cannelé. Chaque grain est ainsi compressé et étiré sous forme de brin qui tombe ensuite sur un tapis collecteur. On obtient ainsi une couche plus ou moins épaisse de brins plus ou moins alignés et plus ou moins enchevêtrés. Les feuillets ou couches de fils sont ensuite découpés transversalement et longitudinalement pour former des carrés ou des rectangles ressemblant à des biscuits. Ces derniers subissent un toastage au four, ce qui leur donne couleur et croustillance.
Une telle technologie est bien connue et ancienne. Si elle permet d'obtenir des produits de qualités appréciés des consommateurs, elle est cependant très longue (environ 24 heures), complexe et onéreuse.

Les documents US 5 132 133, US 1 924 827, US 3 482 992 et US 5 695 805 décrivent des produits céréaliers extrudés à travers des filières.

Le but de la présente invention est de fournir un dispositif permettant la fabrication simple et rapide de céréales pour petit déjeuner sous forme de réseau de brins.

A cette fin, l'invention concerne une filière d'extrusion selon la revendication 1 comprenant un réseau de tubes, les tubes étant disposés parallèlement les uns aux autres, caractérisée en ce que, chaque tube est formé par la superposition de deux plaques comportant sur les faces en vis-à-vis, au moins une gorge de longueur sensiblement égale à 5 à 15 fois le diamètre des tubes et que la distance entre deux tubes contigus est comprise entre 0,8 et 1,2 fois leur diamètre.
Les tubes de la présente filière sont généralement rectilignes.
De même, l'invention concerne aussi un extrudeur comprenant un fourreau allongé renfermant une ou deux vis de traitement, et au moins une telle filière d'extrusion.
Enfin, la présente invention concerne aussi un produit céréalier cuit-extrudé-expansé selon les revendications 9 et 10 comprenant un ensemble de brins expansés parallèles de diamètre compris entre 0,75 et 10 mm, de préférence entre 1 et 2 mm, accolés sur tout ou partie de leur surface externe.
Les gorges présentes sur la surface des plaques peuvent présenter de préférence une section hémi-cylindrique de manière à définir, une fois réunies, des tubes de section circulaire, par exemple. Cependant, la présente invention n'est nullement limitée à des tubes de section circulaire et ces gorges peuvent aussi présenter une section de forme carrée, ovale, elliptique, rectangulaire, par exemple.
Les tubes du réseau peuvent être disposés en au moins une rangée de tubes parallèles. Ils peuvent aussi être disposés sur plusieurs rangées non parallèles.
Par « rangée » de tubes, on entend une suite de tubes dont les extrémités sont disposées sur une même ligne.

D'autre part, il n'est pas obligatoire que les tubes soient disposés en rangée. Ils peuvent aussi être disposés de manière à définir un ou plusieurs contours carrés, ronds, triangulaires ou de toute autre géométrie à la condition que ces tubes soient parallèles et que la distance séparant deux tubes contigus soit comprise entre 0,8 et 1,2 fois le diamètre de ces tubes, ceci de manière à assurer l'union des brins de matière extrudée grâce à l'expansion de celle-ci lors de sa sortie.
Cette filière peut comprendre des tubes de relativement faible diamètre. En effet, le principal inconvénient dans la mise en oeuvre et l'utilisation des filières d'extrusion est leur nettoyage. En dessous d'un certain diamètre, de l'ordre de quelques millimètres, il devient très difficile d'assurer un nettoyage complet et aisé des tubes des filières, sans parler des risques d'obturation par des particules présentes dans le mélange à extruder. La filière selon l'invention est en effet constituée d'un empilement de plaques comportant sur les faces en vis-à-vis, au moins une gorge s'étendant longitudinalement dans le sens du flux de mélange à extruder. Une fois ces plaques réunies et maintenues enserrées dans un cartouche grâce à des pièces-étaux, les gorges définissent ainsi des tubes de diamètre compris entre 0,5 et 4 mm. Cet assemblage permet d'obtenir une filière comportant un réseau de tubes de diamètre relativement faible et qui peut se nettoyer aisément par démontage et séparation des plaques. Les surfaces des plaques et des pièces-étaux en contact comportent des gorges disposées en vis-à-vis de manière à former des tubes au niveau de leur interface. Un tel réseau de tubes parallèles de faible diamètre permet ainsi d'extruder un mélange à base de farine de céréales et d'eau sous la forme de brins expansés relativement fins aussi nombreux que le nombre de tubes de la filière. De plus, du fait d'un espacement entre deux tubes contigus, de l'ordre de 0,8 à 1,2 fois le diamètre de ces tubes, et du fait du coefficient d'expansion du mélange extrudé lors de sa sortie des tubes, pouvant être compris entre 1,5 et 2,5, les brins peuvent s'accoler et se souder de manière à former un produit cohésif.

L'extrudeur comprend donc un fourreau allongé pouvant être thermostaté renfermant une ou deux vis de traitement, et au moins une filière d'extrusion selon la présente invention. Dans une forme préférée, une partie aval du fourreau refermant une extrémité aval de la ou des vis de traitement se termine par une plaque frontale solidaire du fourreau dans laquelle est prévue une chambre de distribution de la matière. Cette chambre distribue la matière cuite vers des filières disposées radialement à l'axe de rotation de la ou des vis ; ces filières étant enserrées dans des cartouches auxquels mènent des canaux de la chambre de distribution.

Par « vis de traitement », on entend la ou les vis de l'extrudeur entraînées en rotation à l'intérieur d'un alésage ou de deux alésages sécants prévus dans le fourreau et sur la ou lesquelles sont fixés des organes de traitement tels que filets enroulés en hélice autour de l'axe. La configuration des vis, le pas, le sens des filets peuvent être prévus de diverses manières le long de l'axe de manière à définir des zones de traitement de la matière telles que transport, humidification, mélange, pétrissage, cisaillement, cuisson, compression.

Le produit selon la présente invention est un produit céréalier cuit-extrudé-expansé comprenant un ensemble de brins expansés parallèles de diamètre compris entre 0,75 et 10 mm, de préférence entre 1 et 2 mm, accolés par toute ou partie de leur surface externe.

La céréale expansée selon la présente invention susceptible d'être obtenue par extrusion au travers de la présente filière présente donc la forme générale d'un réseau de brins expansés parallèles accolés.

Les brins parallèle accolés du réseau peuvent être de formes semblables ou différentes, par exemple. Le réseau peut avoir une épaisseur globale d'environ 4-20 mm, par exemple.

Le réseau peut être généralement plan ou plus ou moins incurvé. Il peut présenter un pourtour de forme générale variée, notamment carré, rectangulaire, circulaire ou ovale, modulé par la répartition des tubes de la buse formant ainsi les brins expansés du bord, par exemple.
On peut envisager différentes formes de réalisations du produit céréalier selon la présente invention telles que des céréales pour petit-déjeuner, des croquettes pour animaux familiers, des en-cas salés ou sucrés, des céréales infantiles, des produits de confiserie, des aliments diététiques et de régime, par exemple.
Dans une forme particulière de l'invention, le présent produit céréalier est co-extrudé en même temps qu'un fourrage à base de crème, fromage, purée de fruit, confiture, viande, sauce ou miel, par exemple. Ainsi dans ce cas, la filière selon l'invention est connectée à l'extrémité d'un extrudeur comprenant une buse centrale destinée à amener la matière du fourrage et une buse périphérique destinée à amener la matière céréalière de l'enveloppe. Dans un tel cas, la filière selon l'invention est aussi constituée par la superposition de plaques comprenant des gorges, mais à la différence près que cette filière est percée en son centre, d'une ouverture destinée à recevoir l'extrémité de la buse centrale de co-extrusion amenant le fourrage.
Un avantage notable du produit céréalier selon la présente invention est sa texture aérée et croustillante. Ainsi grâce à la finesse des brins du réseau et à la configuration feuilletée obtenue, on peut réaliser un produit similaire à une gaufrette. Le produit selon l'invention présente ainsi une texture particulièrement croustillante, légère et qui peut être fourré de crème ou de confiture, par exemple.
En jouant sur les diamètres des trous, sur le coefficient d'expansion de la matière et sa composition, on peut obtenir des produits dont la texture varie entre le vitreux, le dur, le cassant, le croustillant, le friable, la craquant ou le croquant, par exemple.
Dans une forme particulière de réalisation, la céréale expansée selon la présente invention susceptible d'être obtenue par extrusion au travers de la présente filière présente la forme générale d'un réseau de brins expansés parallèles accolés et de couleurs variées. Ainsi, en amont de la filière et de la chambre de distribution de la matière à extruder, le fourreau de l'extrudeur peut comprendre un moyen de séparation de la matière en au moins deux faisceaux de matière qui permet sa coloration par ajout de colorant. La matière ainsi colorée est ensuite extrudée à travers la filière selon la présente invention et on peut obtenir ainsi une céréale au moins bi-colore sous la forme de brins accolés expansés colorés.
Dans une forme de réalisation comme céréale pour petit-déjeuner, par exemple, la présente céréale peut être consommée telle quelle ou enrobée, notamment d'une couverture chocolat, d'un sirop de sucre, d'un sirop de fruit, d'un sirop de miel, ou d'un enrobage contenant des vitamines et des arômes, par exemple.

Le présent procédé de fabrication d'une céréale expansée présentant une forme générale de réseau de brins expansés accolés consiste à cuire-extruder-expanser sous une pression de 40-180 bar à 105-180°C un mélange comprenant, en parties en poids, 60-90 parties de matière amylacée, jusqu'à 15 parties de sucre, jusqu'à 10 parties d'huile, et de l'eau ajoutée jusqu'à une teneur en eau de 7 à 20% en poids du mélange, réaliser l'extrusion au travers d'au moins une filière selon l'invention comprenant un réseau de tubes d'extrusion parallèles de manière à obtenir un faisceau de brins de matière thermoplastique expansée adhérant les uns aux autres. Les brins ainsi obtenus peuvent présenter une texture poreuse.

Le mélange peut comprendre en outre jusqu'à 1,5 parties de calcium, sous forme de carbonate ou triphosphate de calcium, par exemple.

On peut ajouter au mélange des vitamines, des oligoéléments et du chlorure de sodium, par exemple.

On peut y ajouter aussi des agents colorants, des agents aromatisants, voire des ingrédients aromatisants tels que du cacao, par exemple. On peut ajouter jusqu'à 6 parties de cacao, par exemple.

La matière amylacée peut être une farine de céréale, notamment de blé, orge, riz et/ou maïs, et/ou un amidon, notamment de blé, orge, riz, tapioca, pomme de terre et/ou maïs, par exemple.

Le sucre peut être du saccharose, glucose ou fructose, par exemple.

L'huile, ajoutée de préférence à raison de 0-10 parties, peut être de l'huile de beurre ou une huile végétale telle que l'huile de palmiste, par exemple.

La cuisson-extrusion peut être réalisée dans un cuiseur-extrudeur présentant un quotient longueur sur diamètre des vis d'environ 9-24, avec une vitesse de rotation des vis de 240-370 rpm, sous une pression choisie dans le domaine de 40-180 bar et une température choisie dans le domaine de 105-180°C de manière à obtenir un coefficient d'expansion des brins extrudés d'environ 1,5-2,5, par exemple.

De l'eau s'échappe de la masse thermoplastique sous forme de vapeur lors de l'expansion de sorte que les brins extrudés présentent une texture poreuse et peuvent présenter une teneur en eau résiduelle de 5-12%, par exemple.
La céréale expansée ainsi formée par l'accolement des brins peut être découpée dès son expulsion de la filière ou être formée sous la forme d'une longue bande ou barre, puis découpé par la suite, par exemple.
La céréale expansée ainsi obtenue peut être encore séchée, notamment par passage en continu dans un four à air chaud, jusqu'à une teneur en eau résiduelle de 1-3%, par exemple.

Compte tenu du relativement faible diamètre des tubes de la filière selon l'invention, la taille des particules du mélange devra être inférieure ou égale au demi-diamètre des tubes, ceci pour éviter ou limiter le bouchage de ces tubes par des particules du mélange. De même, certains ingrédients pulvérulents hydrosolubles comme le sucre ou le sel, par exemple, peuvent être dissout dans l'eau avant d'être introduits dans le cuiseur-extrudeur.

La filière est décrite ci-après en référence au dessin annexé présenté à titre d'exemple :
La figure 1 est une coupe transversale par rapport à l'axe des tubes, d'une forme de réalisation de la filière d'extrusion selon la présente invention.
La figure 2 présente une coupe axiale selon l'axe AA' figuré sur la figure 1.

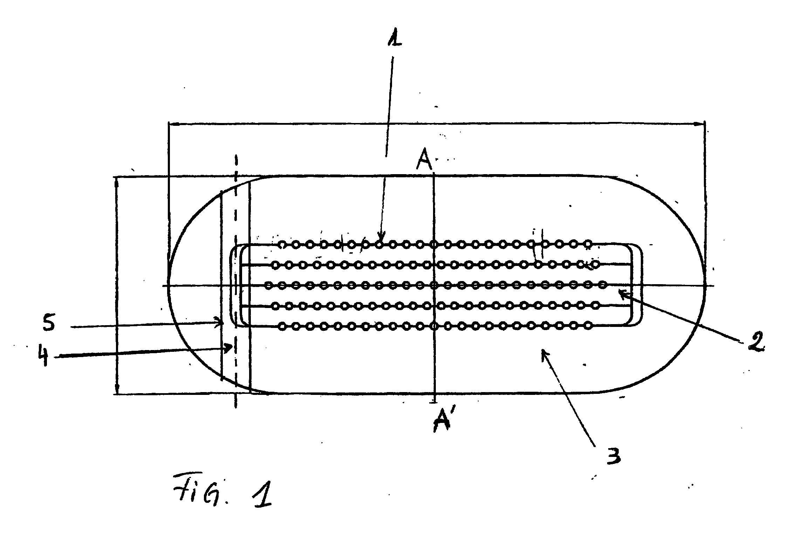

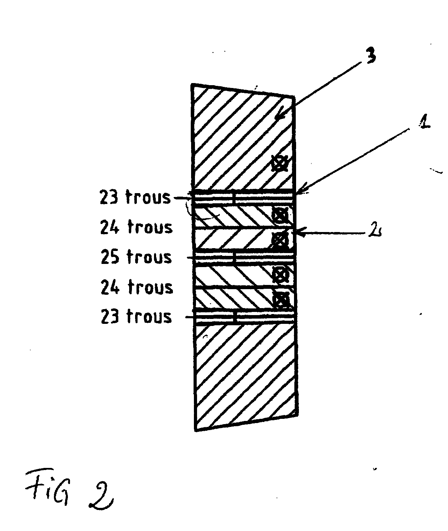

Dans la forme de réalisation présentée aux figures 1 et 2, la filière d'extrusion présente cinq rangées de tubes 1, disposés en quinconce, constituées par l'assemblage de quatre plaques 2 portant sur chaque face des gorges, ces plaques étant maintenues entre deux pièces-étaux 3 maintenues par deux tenons latéraux 4 enfichés dans des mortaises 5. Dans cette forme de réalisation, les faces des pièces-étaux en contact avec les plaques comportent des gorges de manière à former des tubes une fois disposées en vis à vis des gorges présentes sur les faces externes des plaques.

### Exemple

A l'aide d'un cuiseur-extrudeur bivis comprenant plusieurs filières tel qu'illustré aux figures 1 et 2, on produit des céréales expansées présentant la forme d'un réseau de brins accolés.

Pour ce faire, on prépare un mélange présentant la composition suivante (en parties, excepté l'eau ajoutée):

| | |
|---|---|
| Farine de riz | 40 |
| Farine de maïs | 12 |
| Farine de blé | 22 |
| Saccharose | 10 |
| Huile de palmiste | 5 |
| Sel/épices | 3 |
| Eau ajoutée jusqu'à une teneur en eau de 18% | |

Pour préparer le mélange, on mélange d'abord les poudres à sec. On mélange ensuite le mélange sec, l'huile et l'eau ajoutée dans l'extrudeur, en l'occurrence un extrudeur bivis CLEXTRAL type BC-72 ayant un diamètre de vis de vis de 88 mm et une longueur de vis de 900 mm.

On cuit extrude le mélange à 170°C sous 100-120 bar, les vis de l'extrudeur tournant à 310 rpm.

La masse thermoplastique ainsi obtenue est extrudée au travers d'un réseau de 119 tubes, les tubes présentant un diamètre de 0,6 mm et la distance entre deux tubes étant de 0,6 mm.

La masse thermoplastique est extrudée dans l'espace ambiant sous la forme d'un bandeau allongé de brins expansés de 1 mm de diamètre, accolés. Ce bandeau est découpé à l'aide d'un couteau vertical et permet d'obtenir des petits rectangles de 2,5 cm x 2cm constitués par l'accolement des brins expansés.

La céréale obtenue présente la forme générale d'un réseau de 119 brins parrallèles expansés accolés de même forme et de mêmes dimensions. Du fait du pincement lors de la découpe les rectangles de céréales expansés présentent une forme bombée tel un coussin.

## Revendications

1. Filière d'extrusion comprenant un réseau de tubes (1), les tubes étant disposés de parallèlement les uns aux autres, chaque tube est formé par la superposition de deux plaques (2) comportant sur les faces en vis-à-vis, au moins une gorge de longueur sensiblement égale à 5 à 15 fois le diamètre des tubes et que la distance entre deux tubes contigus est comprise entre 0,8 et 1,2 fois leur diamètre, **caractérisée en ce que** les plaques sont maintenues par des pièces étaux (3) et **en ce que** les surfaces des plaques et des pièces-étaux en contact comportent des gorges disposées en vis-à-vis de manière à former des tubes au niveau de leur interface.

2. Filière d'extrusion selon la revendication 1, **caractérisée en ce que** la gorge présente une section hémi-cylindrique.

3. Filière selon les revendications 1 à 2 **caractérisée en ce qu'**elle est percée d'une ouverture destinée à recevoir une buse centrale de coextrusion.

4. Procédé de fabrication d'une céréale expansée présentant une forme générale de réseau de brins expansés accolés, consistant à cuire-extruder-expanser sous une pression de 40-180 bar à 105-180°C un mélange comprenant, en parties en poids, 60-90 parties de matière amylacée, jusqu'à 15 parties de sucre, jusqu'à 10 parties d'huile, et de l'eau ajoutée jusqu'à une teneur en eau de 7 à 20% en poids du mélange, réaliser l'extrusion au travers d'au moins une filière selon l'une des revendications 1 à 2.

5. Procédé selon la revendication 4, dans lequel la taille des particules du mélange est inférieure ou égale au demi-diamètre des tubes de la filière.

6. Procédé selon la revendication 4, dans lequel on obtient un coefficient d'expansion des brins extrudés de 1,5 à 2,5.

7. Procédé selon la revendication 4, dans lequel les brins extrudés présentent une texture poreuse.

8. Procédé selon la revendication 4, dans lequel les brins extrudés présentent une teneur en eau résiduelle de 5-12%.

9. Céréale expansée susceptible d'être obtenue par extrusion au travers d'une filière selon la revendication 1, présentant une forme générale d'un réseau de 119 brins expansés parallèles accolés.

10. Produit céréalier cuit-extrudé-expansé comprenant un ensemble de 119 brins expansés parallèles de diamètre compris entre 0,75 et 10 mm, accolés par toute ou partie de leur surface externe.

11. Produit céréalier selon la revendication 10 **caractérisé en ce qu'**il est au moins bi-colore.

12. Produit céréalier selon la revendication 10 **caractérisé en ce qu'**il comprend un fourrage.

## Patentansprüche

1. Extrusionsdüse, bestehend aus einer Gruppierung von Rohren (1), die zueinander parallel angeordnet sind und deren jedes durch Übereinanderlegen von zwei Platten (2) gebildet ist, die auf den einander gegenüberstehenden Seiten mindestens eine Nut aufweisen, deren Länge im wesentlichen gleich dem 5- bis 15-fachen des Durchmessers der Rohre ist, wobei der Abstand zwischen zwei benachbarten Rohren das 0,8- bis 1,2-fache ihres Durchmessers beträgt, **dadurch gekennzeichnet, daß** die Platten durch Spannelemente (3) gehalten sind und daß die in gegenseitigem Kontakt befindlichen Oberflächen der Platten und der Spannelemente Nuten aufweisen, die einander gegenüber so angeordnet sind, daß auf Höhe ihrer Trennfläche Rohre gebildet werden.

2. Extrusionsdüse nach Anspruch 1, **dadurch gekennzeichnet, daß** die Nut einen halbzylindrischen Querschnitt aufweist.

3. Düse nach den Ansprüchen 1 bis 2, **dadurch gekennzeichnet, daß** sie mit einer Bohrung versehen ist, die zur Aufnahme einer zentralen Koextrusionsdüse bestimmt ist.

4. Verfahren zur Herstellung einer expandierten Cerealie, die die allgemeine Form einer Gruppierung von aneinandergefügten expandierten Strängen aufweist, wobei das Verfahren darin besteht, daß eine Mischung, die in Gewichtsteilen 60-90 Teile stärkehaltiges Material, bis zu 15 Teile Zucker, bis zu 10 Teile Öl und zugesetztes Wasser bis zu einem Wassergehalt von 7 bis 20 Gew.-% der Mischung enthält, unter einem Druck von 40-180 bar bei 105-180°C gekocht, extrudiert und expandiert wird und die Extrusion durch mindestens eine Düse nach einem der Ansprüche 1 bis 2 durchgeführt wird.

5. Verfahren nach Anspruch 4, bei dem die Größe der Teilchen der Mischung kleiner als oder gleich dem halben Durchmesser der Rohre der Düse ist.

6. Verfahren nach Anspruch 4, bei dem man einen Expansionskoeffizient der extrudierten Stränge von 1,5 bis 2,5 erhält.

7. Verfahren nach Anspruch 4, bei dem die extrudierten Stränge eine poröse Textur aufweisen.

8. Verfahren nach Anspruch 4, bei dem die extrudierten Stränge einen Restwassergehalt von 5-12 % aufweisen.

9. Expandierte Cerealie, die durch Extrusion durch eine Düse nach Anspruch 1 erhalten werden kann und allgemein die Form einer Gruppierung von 119 aneinandergefügten, expandierten parallelen Strängen hat.

10. Gekochtes, extrudiertes und expandiertes Cerealienprodukt, das eine Einheit von 119 parallelen expandierten Strängen mit einem Durchmesser zwischen 0,75 und 10 mm aufweist, die mit ihrer ganzen Außenfläche oder einem Teil davon aneinandergefügt sind.

11. Cerealienprodukt nach Anspruch 10, **dadurch gekennzeichnet, daß** es mindestens zweifarbig ist.

12. Cerealienprodukt nach Anspruch 10, **dadurch gekennzeichnet, daß** es eine Füllung aufweist.

## Claims

1. An extrusion die comprising a network of tubes (1), the tubes being disposed parallel to one another, each tube being formed by superposition of two plates (2) comprising on the opposing faces at least one groove substantially equal in length to 5 to 15 times the diameter of the tubes and the distance between two contiguous tubes being between 0.8 and 1.2 times their diameter, **characterised in that** the plates are held in place by vice members (3) and **in that** the surfaces of the plates and the vice members in contact comprise grooves disposed opposite one another in such a way as to form tubes at the level of their interface.

2. An extrusion die according to claim 1, **characterised in that** the groove is semi-cylindrical in section.

3. A die according to claims 1 and 2, **characterised in that** it is penetrated by an opening designed to receive a central coextrusion nozzle.

4. A method of manufacturing an expanded cereal having the general form of a network of joined expanded strands, consisting in cooking/extruding/expanding under a pressure of 40-180 bar at 105-180°C a mixture comprising, in parts by weight, 60-90 parts of starchy material, up to 15 parts of sugar, up to 10 parts of oil and water added up to a water content of 7 to 20% by weight of the mixture, performing extrusion through at least one die according to one of claims 1 to 2.

5. A method according to claim 4, in which the size of the particles of the mixture is smaller than or equal to half the diameter of the tubes of the die.

6. A method according to claim 4, in which a coefficient of expansion of the extruded strands of 1.5 to 2.5 is obtained.

7. A method according to claim 4, in which the extruded strands have a porous texture.

8. A method according to claim 4, in which the extruded strands have a residual water content of 5-12%.

9. An expanded cereal capable of being obtained by extrusion through a die according to claim 1, having the general form of a network of 119 joined parallel expanded strands.

10. A cooked/extruded/expanded cereal product comprising an assembly of 119 parallel expanded strands of a diameter of between 0.75 and 10 mm, joined over all or part of their outer surface.

11. A cereal product according to claim 10, **characterised in that** it is at least two-coloured.

12. A cereal product according to claim 10, **characterised in that** it comprises a filling.
